# EUROPEAN PATENT SPECIFICATION

(11) **EP 0 564 631 B1**
(45) Date of publication and mention of the grant of the patent: **28.02.1996**
(21) Application number: 92922530.8
(22) Date of filing: 23.09.1992
(51) Int. Cl.: B62D 21/18, B66F 9/06

(54) **FRAME FOR MATERIAL-HANDLING EQUIPMENT AND A MATERIAL-HANDLING EQUIPMENT INCLUDING THIS TYPE OF FRAME**
RAHMEN FÜR MATERIAL-HANTIERUNGSAUSRÜSTUNG UND MATERIAL-HANTIERUNGSAUSRÜSTUNG MIT EINEM SOLCHEN RAHMEN
CHASSIS POUR VEHICULE DE MANUTENTION ET MATERIEL DE MANUTENTION LE COMPRENANT

(30) Priority: 24.10.1991 BG 95360/91
(43) Date of publication of application: 13.10.1993
(73) Proprietor: VENINSKI, Angel Ivanov, 4023 Plovdiv (BG); TANEV, Milko Totev, Plovdiv (BG)
(72) Inventor: VENINSKI, Angel Ivanov, 4023 Plovdiv (BG); TANEV, Milko Totev, Plovdiv (BG)
(74) Representative: Tiedtke, Harro, Dipl.-Ing.
(86) International application number: BG9200005
(87) International publication number: WO9308064

(56) References cited:
- EP-A- 0 264 172
- EP-A- 0 391 289
- AT-B- 385 020
- CH-A- 385 740
- DE-A- 3 020 250
- DE-B- 2 110 761
- GB-A- 2 149 730
- Derwent's abstract, No 85-228 768/37, week 8537, ABSTRACT OF SU 1 141 039, (AUTOLOADERS DES BUR), 1985-02-23

## Description

The invention relates to frame for material-handling vehicle which is used in lift truck industry and especially in the engine-driven lift trucks.

Well known is a frame for material-handling vehicle, consiting of longitudinal sheet beams, positioned parallel to each other, ending in its front end with brackets with holes for mounting a lifting equipment. Near the bracket ends and under the longitudinal beams are welded perpendicularly to the longitudinal beams supports for mounting the drive axle. The longitudinal beams are rigidly connected by a front transverse beam, intermediate beam with concave form and rear transverse beam. The intermediate and rear transverse beams have nests in their middle lower part for mounting the steering axle. On the outer side of the longitudinal beams are welded perpendicularly and connected to each other front mudguard, rib and rear mudguard.

The disadvantages of the frame for material-handling vehicle are its bad technological possibilities for production, lack of unification for mounting of different drive and steering axles, lifting equipments, engines and transmissions with different mounting dimensions and type of mounting, because in this case a general change of basic elements or the whole frame will be necessary. At the same time the frame is a part of the outer view of the material-handling vehicle. These disadvantages rise the cost for frame production and the very vehicle. Frames according to the features of the preamble of the claim are known e.g. from GB-A-2 149 730 or EP-A-0 264 172.

Task of the invention is to provide frame for material-handling vehicle, that gives the good technological possibilities for production, universal about the possibility for mounting different drive and steering axles, lifting equipments, engines and transmissions with different types and dimensions of mounting and not to determine the outer view of the material-handling vehicle.

The solution is a frame for material-handling vehicle consisting of two parallel longitudinal sheet beams, connected by means of front, intermediate and rear transverse beams, and on the outer side of the longitudinal beams are welded perpendicularly to the beams and welded to each other front mudguard, rib and rear mudguard. According to the features of the characterising part of the claim, the longitudinal beams are leveled at their front end by the front side of the front transverse beam, which has a [ cross section. The upper plate of the front transverse beam is positioned over the longitudinal sheet beams and form the upper part of the front mudguards. Towards the front part of the front transverse beam are welded two combined brackets for mounting the drive axle and the lifting equipment. The rear transverse beam is with concave form opened upwards, its ends having trapezoidal form and protruding over the longitudinal sheet beams. Along the longitudinal axis of the frame to the lowest part of the intermediate and rear transverse beam is permanently connectd a support with threaded hole at its rear end, and towards the lower part of the support is connected a horizontal plate carryint the eyes for the steering axle. At the inner side of the longitudinal transverse beams, in the space between the front and intermediate transverse beams, are welded brackets for mounting the engine and the transmission.

Advantage of the frame for material-handling vehicle according to the invention is the fact that it gives the possibility for the basic part of the frame, consisting of longitudinal sheet beams, front, intermediate and rear transverse beams, support, horizontal plate, front mudguard, rib and rear mudguards to be manufactured separately without brackets for mounting drive and steering axle, lifting equipment, engine and transmission. The brackets and the eyes comply with type and dimensions for mounting of these units and are with simple design and easy for production. The combinations of the two separatele produced groups of elements of the frame at the final welding station increase the variaty in relation to the units mounted in the vehicle. The frame is technological and very small number of equipments is necessary for its production reserving great variaty of mounted units. The frame does not form the outer design of the vehicle being an inner part of the material handling vehicle.

When mounting the frame in the material handling vehicle an easy reach to all units is achieved. As the frame is unvisible element of the outer desigh of the material handling vehicle, the elements that form the outer design of the material handling vehicle are connected to it by means of thread joints. These elements have decorative functions and are with high quality painting. The mounted to the frame side covers form cavities between the mudguards where the fluid tanks are situated.

The invention will now be futher described with reference to the drawing in which:

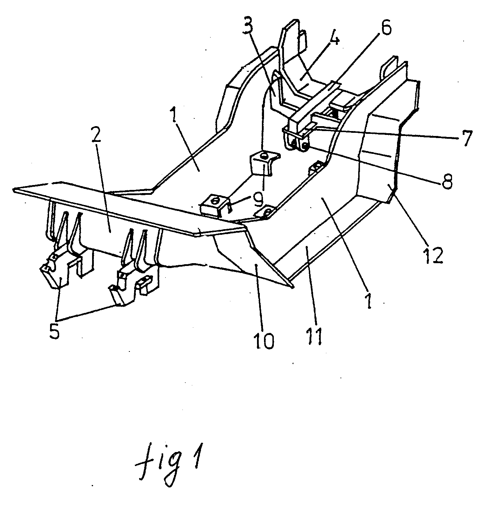

Figure 1 is an example drawing of the frame for material-handling vehicle.

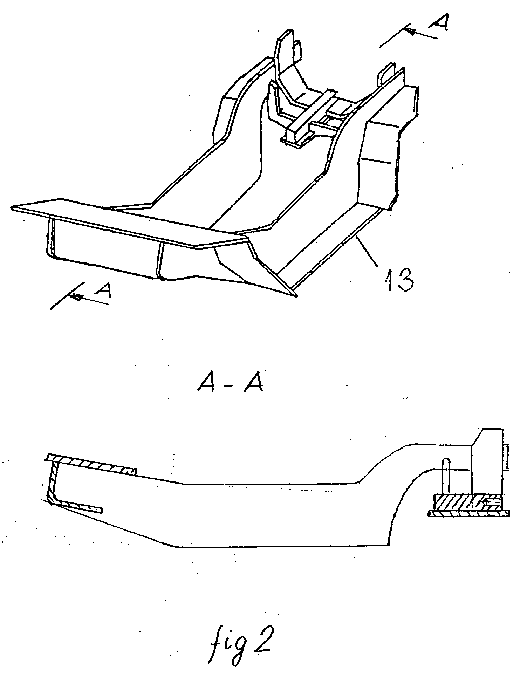

Figure 2 shows the basic part of the frame.

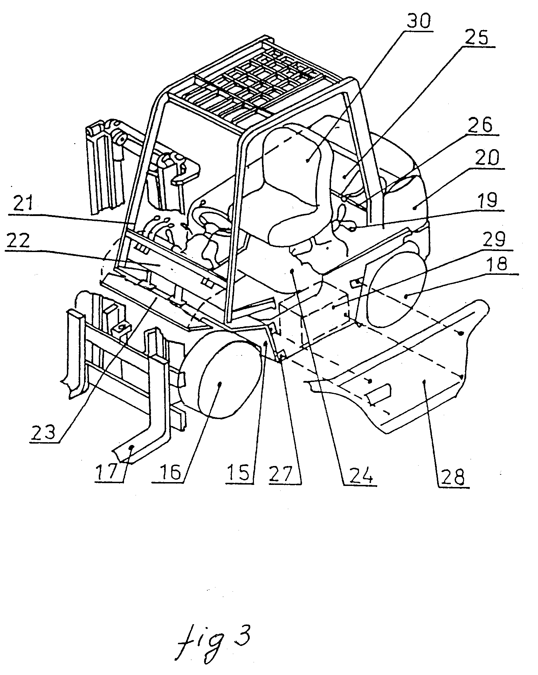

Figure 3 shows the frame as a part of a material handling vehicle.

The frame for material-handling vehicle consists of two parallel longitudinal sheet beams 1, connected rigidly with front transverse beam 2, intermediate transverse beam 3 and rear transverse beam 4, on the outer side of the longitudinal beams 1 are welded perpendicularly to the beams and welded to each other front mudguard 10, rib 11 and rear mudguard 12. The longitudinal beams 1 are leveled at their front end by the front side of the front transverse beam 2, which has a [ cross section. The upper plate of the front transverse beam is positioned over the longitudinal sheet beams 1 and form the upper part of the front mudguards, towards the front part of the front transverse beam are welded two brackets 5, the rear transverse beam 4 is with concave form opened upwards, its ends having trapezoidal form and protruding over the longitudinal sheet beams 1. Along the longitudinal axis of the frame to the lowest part of the intermediate transverse beam 3 and rear transverse beam 4 is permanently connected a support 6 with threaded hole at its rear end, and towards the lower part of the support 6 is connected a horizontal plate 7 carrying the eyes 8. At the inner side of the longitudinal transverse beams 1 in the space between the front transverse beams 2 and intermediate transverse beams 3 are connected brackets 9.

An example execution of the frame according to the invention in a material handling vehicle is with mounted to it drive axle 16, steering axle 18, lifting equipment 17, engine and transmission 19, to the frame by means of threaded connection are mounted counterweight 20, roof construction 21 with attached to it front shield 22 with jointly connectd to it cover 23. Jointly connected to each other cover 24, carrying seat 30 and cover 25 by means of axle 26, connected to the counterweight 20 by means of dismountable connection. By means of dismoutable joints to the frame 15 are connected covers 28, and in the cavity between them is formed space for fluid tanks 29.

## Claims

1. Frame for material-handling vehicle consisting of two parallel longitudinal sheet beams (1), connected rigidly with front transverse beam (2), intermediate beam (3) and rear beam (4), on the outer side of the longitudinal beams are welded perpendicularly to the beams and welded to each other front mudguard, rib and rear mudguard, characterised in that the longitudinal beams (1) are leveled at their front end by the front side of the front transverse beam (2), which has a [-cross section, whose upper plate is positioned over the longitudinal sheet beams (1) and form the upper part of the front mudguards, towards the front part of the front transverse beam are welded two combined brackets (5) for mounting the drive axle and the lifting equipment, the rear transverse beam (4) is with concave form opened upwards, its ends having trapezoidal form and protruding over the longitudinal sheet beams (1), along the longitudinal axis of the frame to the lowest part of the intermediate (3) and rear (4) transverse beam being permanently connected a support (6) with threaded hole at its rear end, and towards the lower part of the support (6) is connected a horizontal plate (7) carrying the eyes (8), as to the inner side of the longitudinal transverse beams (1) in the space between the front transverse beam (2) and intermediate transverse beam (3) are connected brackets (9).

## Patentansprüche

1. Rahmen für ein Material-Hantierungsfahrzeug aus zwei parallelen Längsblechbalken (1), die fest mit einem Vorderquerbalken (2), einem Zwischenbalken (3) und einem Hinterbalken (4) verbunden sind, wobei an der Außenseite der Längsbalken Vorderkotflügel, Rippe und Hinterkotflügel senkrecht zu den Balken und miteinander verschweißt sind, **dadurch gekennzeichnet, daß** die Längsbalken (1) an ihrem Vorderende mittels der Vorderseite des Vorderquerbalkens (2) abgeschrägt sind, der einen [-Querschnitt aufweist, dessen Oberplatte über den Längsblechbalken (1) positioniert ist und das Oberteil der Vorderkotflügel bildet, wobei an dem Vorderteil des Vorderquerbalkens zwei kombinierte Halter (5) für die Anbringung der Antriebsachse und der Hubausrüstung angeschweißt sind, der Hinterrahmenbalken (4) mit gewölbter Form nach oben geöffnet ist, seine Enden trapezförmig sind und über die Längsblechbalken (1) vorragen, entlang der Längsachse des Rahmens eine Abstützung (6) mit einem an ihrem Hinterende befindlichen Gewindeloch dauerhaft mit dem untersten Teil des Zwischenquerrahmens (3) und des Hinterquerrahmens (4) verbunden ist, und am Unterteil der Abstützung (6) eine, Augen (8) tragende Horizontalplatte (7) verbunden ist, wobei an der Innenseite der Längsquerbalken (1) in dem zwischen dem Vorderquerbalken (2) und dem Zwischenquerbalken (3) befindlichen Raum Stützen (9) verbunden sind.

## Revendications

1. Châssis pour véhicule de manutention comprenant deux poutres (1) en tôle longitudinales parallèles reliées entre elles rigidement au moyen d'une poutre (2) transversale avant, d'une poutre (3) intermédiaire et d'une poutre (4) arrière, un garde-boue avant, un renfort et un garde-boue arrière étant soudés du côté extérieur des poutres longitudinales perpendiculairement aux poutres, et étant soudés entre eux, caractérisé en ce que les poutres (1) longitudinales sont redressées à leur extrémité avant par le côté avant de la poutre (2) transversale avant qui présente une section transversale en C, dont la plaque supérieure est placée au-dessus des poutres (1) en tôle longitudinales et forme la partie supérieure des gardes-boue avant, deux ferrures (5) combinées pour le montage de l'axe d'entraînement et de l'équipement de levage étant soudées vers la partie avant de la poutre transversale avant, la poutre (4) transversale arrière présentant une forme concave ouverte vers le haut, ses extrémités présentant une forme trapézoïdale et faisant saillie au-dessus des poutres (1) en tôle longitudinales, un support (6), muni d'un trou taraudé à son extrémité arrière, étant relié en permanence, le long de l'axe longitudinal du châssis, à la partie la plus basse des poutres transversales intermédiaire (3) et arrière (4), une plaque horizontale (7) portant les oeillets (8) étant reliée vers la partie inférieure du support (6) ainsi que des ferrures (9) étant reliées au côté intérieur des poutres transversales longitudinales dans l'espace s'étendant entre la poutre (2) transversale avant et la poutre (3) transversale intermédiaire.
